# EUROPÄISCHE PATENTANMELDUNG

(11) **EP 4 209 380 A1**
(43) Veröffentlichungstag der Anmeldung: **12.07.2023**
(21) Anmeldenummer: 22215844.6
(22) Anmeldetag: 22.12.2022
(51) Int. Cl.: B60L 3/00, B60L 58/10, H01M 50/574

(54) **BATTERIEMANAGEMENTSYSTEM UND BATTERIESYSTEM**

(30) Priorität: 05.01.2022 DE 102022200044
(71) Anmelder: Continental Engineering Services GmbH, 60489 Frankfurt (DE)
(72) Erfinder: Dr. Matz, Stephan, 60488 Frankfurt am Main (DE)
(74) Vertreter: Continental Corporation

(57) **Zusammenfassung**

Die Erfindung betrifft ein Batteriesystem (10) für eine Batterie, insbesondere eine Fahrzeugbatterie (12), mit einer Messeinrichtung (48) für zumindest einen Batterieparameter, zumindest einer Schaltvorrichtung (40, 42, 44) zum Unterbrechen eines Stromkreises (28), einer Trennvorrichtung (46) zur Unterbrechung des Stromkreises (28) , wobei die zumindest eine Messeinrichtung (48), die Schaltvorrichtung (40, 42, 44) und die Trennvorrichtung (46) in einem isolierten Gehäuseabschnitt (62) angeordnet sind, wobei der Gehäuseabschnitts (62) zumindest eine isolierte Schnittstelle (64, 66, 70) zu Kontaktierung einer mit einer Steuer- und Kontrolleinrichtung (58) und/oder einer Fahrzeugelektronik (72) aufweist.

## Beschreibung

Die Erfindung betrifft ein Batteriemanagementsystem für eine Batterie in einem Fahrzeug sowie ein Batteriesystem.

Fahrzeuge, insbesondere Elektrofahrzeuge mit einem Hochvolt-Stromkreis, weisen üblicherweise ein Batteriemanagementsystem auf, dass alle Funktionen der Fahrzeugbatterie überwacht und gegebenenfalls steuert. Üblicherweise weist ein solches Batteriemanagementsystem zumindest eine Messvorrichtung zur Erfassung und Überwachung von Batterieparametern auf. Beispielsweise kann so eine Messvorrichtung die einzelnen Batteriezellen einer solchen Batterie überwachen, wobei beispielsweise die Zellspannung und/oder die Zelltemperatur der einzelnen Batteriezellen erfasst wird. Des Weiteren kann eine solche Messvorrichtung den zwischen der Batterie und den Stromkreisen des Fahrzeugs fließenden Strom ermitteln und überwachen, wobei die Stromstärke/oder die Spannung erfasst werden können.

Zusätzlich kann das Batteriemanagementsystem mindestens eine Schaltvorrichtung und/oder Trennvorrichtung aufweisen, um bei Bedarf die Fahrzeugbatterie vom Stromkreis des Fahrzeugs, insbesondere von allen anderen Bauteilen des Fahrzeugs trennen zu können.

Des Weiteren ist eine Steuer- und Kontrollvorrichtung vorgesehen, die die Daten der Messvorrichtungen auswertet und gegebenenfalls an eine Fahrzeugsteuerung ausgibt. Des Weiteren kann die Steuer- und Kontrollvorrichtung in Abhängigkeit von den gemessenen Werten oder anderen erfassten Daten des Fahrzeugs die Schaltvorrichtung und/oder die Trennvorrichtung aktivieren.

Üblicherweise sind die Messvorrichtungen, die Steuer- und Kontrollvorrichtung sowie die Schaltvorrichtung und/oder die Trennvorrichtung separat ausgebildet und oder in separaten Gehäusen angeordnet. Aufgrund der hohen Spannung und hohen Stromstärke ist es erforderlich, diese Vorrichtungen besonders gut gegen andere Bauteile des Fahrzeugs zu isolieren. Insbesondere muss eine zuverlässige Trennung zwischen den Hochvolt-Komponenten und den Niedervolt-Komponenten des Fahrzeugs, beispielsweise der Steuer- und Kontrollvorrichtung oder der Fahrzeugelektronik, sichergestellt sein. Dazu ist es erforderlich, insbesondere die Schnittstellen gegen einen Spannungsüberschlag zu sichern. Aufgrund der separaten Anordnung und der erforderlichen Isolation benötigen die einzelnen Vorrichtungen separate Stecker und/oder Kabelbäume, um diese untereinander und mit der Fahrzeugelektronik zu verbinden. Dadurch steigt der Isolationsaufwand und somit auch der Herstellungs- und der Montageaufwand.

Aufgabe der Erfindung ist es, ein kompaktes Batteriemanagementsystem bereitzustellen, dass einen einfachen Aufbau aufweist und kostengünstig herzustellen ist.

Zur Lösung der Aufgabe ist ein Batteriemanagementsystem für eine Batterie vorgesehen, insbesondere eine Fahrzeugbatterie, mit einer Messeinrichtung für zumindest einen Batterieparameter, zumindest einer Schaltvorrichtung zum Unterbrechen des Stromkreises, einer Trennvorrichtung zur Unterbrechung des Stromkreises. Die zumindest eine Messeinrichtung, die Schaltvorrichtung und die Trennvorrichtung sind in einem isolierten, insbesondere einem galvanisch isolierten, Gehäuseabschnitt angeordnet, wobei das Gehäuse eine isolierte Schnittstelle zu Kontaktierung mit einer Steuer- und Kontrolleinrichtung aufweist.

Der Grundgedanke der Erfindung besteht darin, alle Hochvolt-Komponenten eines Batteriemanagementsystems in einem gemeinsamen Gehäuse anzuordnen, wobei eine gemeinsame Schnittstelle zur Kontaktierung mit den übrigen Komponenten und/oder der Fahrzeugelektronik vorgesehen ist. Diese Gehäuse sowie die Schnittstelle sind nach den entsprechenden Standards isoliert, um einen Spannungsüberschlag zuverlässig zu verhindern. Nicht Hochvolt-Komponenten sind außerhalb dieses Gehäuses vorgesehen, um das isolierte Gehäuse möglichst kompakt und klein auszuführen.

Da alle Hochvolt-Komponenten in einem gemeinsamen Gehäuse angeordnet sind, wird der Aufwand, um diese Komponenten gegen andere Fahrzeugteile und/oder Komponenten zu isolieren, deutlich reduziert. Durch das Vorsehen einer gemeinsamen Schnittstelle wird zudem der Aufwand der Isolierung der Hochvolt-Komponenten zum übrigen Stromkreis reduziert. Des Weiteren ist auch der Bedarf an zusätzlichen Kabeln und/oder Stecker reduziert, sodass der Herstellung- und Montageaufwand deutlich reduziert werden kann.

Beispielsweise kann das Batteriemanagementsystem eine Steuer- und Kontrolleinrichtung aufweisen, die zum Empfang der Informationen der zumindest einen Messeinrichtung, zur Überwachung des Stromkreislaufes und zur Steuerung der zumindest einen Schaltvorrichtung und der Trennvorrichtung und zum Empfang von Informationen der Batteriezellen ausgebildet ist. Um das isolierte Gehäuse möglichst klein auszubilden, kann diese Steuer- und Kontrolleinrichtung außerhalb des isolierten Gehäuseabschnitts angeordnet sein, wobei eine Kontaktierung vorzugsweise über eine gemeinsame, isolierte Schnittstelle erfolgt. Die Steuer- und Kontrolleinrichtung ist keine der Hochvolt-Komponenten. Somit ist es nicht erforderlich, diese in einem isolierten Gehäuseabschnitt anzuordnen. Die Anordnung außerhalb des isolierten Gehäuseabschnitts hat zudem den Vorteil, dass der Anschluss an eine Fahrzeugelektronik einfacher ist, die Schnittstelle zwischen der Steuer- und Kontrolleinrichtung und der Fahrzeugelektronik nicht gesondert isoliert und/oder abgesichert sein muss. Da die Schnittstelle des Gehäuseabschnitts isoliert ist, ist ein zuverlässiger Schutz der Steuer- und Kontrollvorrichtung sowie der Fahrzeugelektronik vor einem Spannungsüberschlag sichergestellt.

Vorzugsweise sind am isolierten Gehäuseabschnitt Kontakte zu Kontaktierung mit einer Fahrzeugbatterie vorgesehen, um die Hochvolt-Komponenten mit der Fahrzeugbatterie zu verbinden.

Die Steuer- und Kontrolleinrichtung kann zumindest einen Eingang für eine Batteriezellenüberwachungseinrichtung aufweisen. Die Batteriezellenüberwachungseinrichtungen messen beispielsweise die Zellenspannung und/oder die Zellentemperatur der einzelnen Batteriezellen. Die einzelnen Batteriezellen sind üblicherweise in Serie geschaltet, um die bei einem Elektrofahrzeug erforderliche hohe Spannung von beispielsweise 400 V bereitzustellen. Die Spannung der einzelnen Batteriezellen ist dagegen wesentlich geringer. Die Batteriezellenüberwachungseinrichtungen messen somit keinen Strom im Hochvolt-Bereich oder haben Kontakt zu Hochvolt-Komponenten. Es ist daher nicht erforderlich, diese im isolierten Gehäuseabschnitt für Hochvolt-Komponenten anzuordnen. Im Stand der Technik ist häufig die Steuer- und Kontrolleinrichtung im Gehäuse für die Hochvolt-Komponenten angeordnet, sodass es erforderlich ist, eine entsprechend isolierte Schnittstelle zwischen der Steuer- und Kontrolleinrichtung und den Batteriezellenüberwachungseinrichtungen bereitzustellen. Da die Steuer- und Kontrolleinrichtung außerhalb des Gehäuseabschnitts für die Hochvolt-Komponenten angeordnet ist, ist eine einfache Kontaktierung der Batteriezellenüberwachungseinrichtungen mit der Steuer-Kontrolleinrichtung möglich, die vollständig außerhalb des isolierten Hoch-Volt-Gehäuseabschnitts verläuft.

Eine erste Messeinrichtung kann eine Spannungsmesseinrichtung sein. Da diese mit dem Hochvolt-Stromkreis in Kontakt ist, ist es erforderlich, diese besonders gut zu isolieren, also innerhalb des isolierten Gehäuseabschnitts anzuordnen.

Eine zweite Messeinrichtung ist beispielsweise eine Strommesseinrichtung. Üblicherweise werden in Fahrzeugen Messeinrichtungen verwendet, die einen im Stromkreis angeordneten Messwiderstand aufweisen, der vom zu messenden Strom durchströmt wird. Die Strommesseinrichtung ermittelt den Spannungsabfall über diesen Messwiderstand. Aus dem erfassten Spannungsabfall sowie dem bekannten elektrischen Widerstand des Messwiderstandes kann über das ohmsche Gesetz der über den Messwiderstand fließende Strom bestimmt werden. Insbesondere bei einer solchen Strommesseinrichtung ist eine zuverlässige Isolierung gegenüber anderen Fahrzeugteilen erforderlich, die auf einfache Weise durch den isolierten Gehäuseabschnitt bereitgestellt werden kann.

Aufgrund der hohen Ströme kann es zu einer Erwärmung der Komponenten innerhalb des Gehäuseabschnitts kommen. Der Gehäuseabschnitt weist vorzugsweise Wärmeableitelemente auf, um diese Wärme aus dem Gehäuse abzuführen.

Vorzugsweise sind diese Wärmeleitelemente durch eine Gehäusewand mit einer hohen Wärmeleitfähigkeit ausgebildet, wobei die zumindest eine Messeinrichtung, die Schaltvorrichtung und die Trennvorrichtung an dieser Gehäusewand angeordnet sind. Dadurch kann eine besonders gute Wärmeableitung aus dem Gehäuse erzielt werden.

Zur Lösung der Aufgabe ist des Weiteren ein Batteriesystem für ein Fahrzeug vorgesehen, mit zumindest einer Batterie, einem vorstehend beschriebenen Batteriemanagementsystem und mit einer Steuer- und Kontrollvorrichtung, wobei die Steuer- und Kontrollvorrichtung außerhalb des isolierten Gehäuseabschnitts angeordnet ist, wobei an der zumindest einen Batterie eine Batteriezellenüberwachungseinrichtung für zumindest eine Batteriezelle vorgesehen ist, wobei die Batteriezellenüberwachungseinrichtung direkt mit der Steuer- und Kontrolleinrichtung verbunden ist.

Weitere Vorteile und Merkmale ergeben sich aus der nachfolgenden Beschreibung in Verbindung mit den beigefügten Zeichnungen. In diesen zeigen
- Figur 1: eine erste Ausführungsform eines erfindungsgemäßen Batteriemanagementsystems
- Figur 2: eine zweite Ausführungsform eines erfindungsgemäßen Batteriemanagementsystems

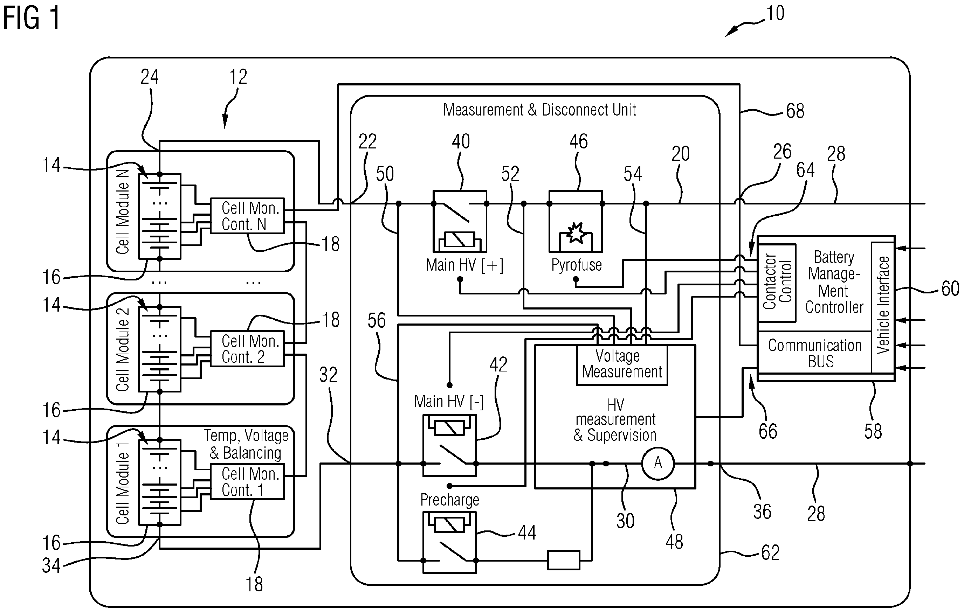

In Figur 1 ist ein Batteriesystem 10 für ein Fahrzeug mit einer Fahrzeugbatterie 12 gezeigt.

Die Fahrzeugbatterie 12 weist mehrere Batteriezellen 14 auf, die zu Zellmodulen 16 zusammengefasst sind. Die einzelnen Zellmodule 16 sind elektrisch in Reihe geschaltet, um auf die für Elektrofahrzeuge erforderlich hohe Spannung zu kommen. Beispielsweise hat die Fahrzeugbatterie 12 eine Spannung von 400 V.

An jeder Batteriezelle 14 bzw. an jedem Zellmodul 16 ist eine Batteriezellenüberwachungseinrichtung 18 vorgesehen, die die Zellspannung die Temperatur der Batteriezelle 14 erfasst. Die Batteriezellenüberwachungseinrichtungen 18 kann des Weiteren weitere Parameter der Batteriezelle 14 erfassen, die erforderlich sind, um die Funktion der Batteriezelle 14 bzw. des Zellmoduls 16 zu überwachen.

Das Batteriesystem 10 weist einen ersten Strompfad 20 auf, der einen ersten Anschluss 22 für einen ersten Batteriepol 24 der Fahrzeugbatterie 12 aufweist sowie einen ersten Kontakt 20 zur Kontaktierung mit einem Stromkreis 28 des Fahrzeugs. Des Weiteren ist ein zweiter Strompfad 30 vorgesehen, mit einem ersten Anschluss 32 für einen zweiten Batteriepol 34 der Fahrzeugbatterie 12 einem zweiten Kontakt 36 für den Stromkreis 28. Am zweiten Strompfad 30 zweigt ein dritter Strompfad 38 ab, über den ein Vorladestrom für die Fahrzeugbatterie 12 fließen kann.

Im ersten Strompfad 20, zweiten Strompfad 30 sowie im dritten Strompfad 38 ist jeweils eine Schaltvorrichtung 40, 42, 44 vorgesehen, die jeweiligen Strompfad 20, 30, 38 unterbrechen kann, sodass die Fahrzeugbatterie 12 vom Stromkreis 28 getrennt werden kann. Im ersten Strompfad 20 ist des Weiteren zusätzlich eine Trennvorrichtung 46 vorgesehen, in der hier gezeigten Ausführungsform eine pyrotechnische Trennvorrichtung, die den ersten Strompfad 20 unterbrechen kann und somit die Fahrzeugbatterie 12 vom Stromkreis 28 trennen kann.

Des Weiteren ist eine Messvorrichtung 48, beispielsweise eine Spannungsmessvorrichtung und/oder eine Strommessvorrichtungen vorgesehen. Die Messvorrichtung 48 ist am zweiten Strompfad 30 vorgesehen. Zusätzlich ist die Messvorrichtung 48 über Signalleitungen 50, 52, 54, 56 mit den Strompfaden 20, 30, 38 verbunden.

Darüber hinaus ist eine Steuer- und Kontrollvorrichtung 58 vorgesehen, die mit den Batteriezellenüberwachungseinrichtungen 18, den Schaltvorrichtungen 40, 42, 44, der Trennvorrichtung 46 sowie der Messvorrichtung 48 verbunden ist. Des Weiteren ist die Steuer- und Kontrollverrichtung 58 über eine Schnittstelle 60 mit einer Fahrzeugelektronik verbunden. Die Steuer- und Kontrollvorrichtung 48 kann die Informationen der Batteriezellenüberwachungseinrichtungen 18, der Messvorrichtung 48 sowie zusätzliche Informationen, die über die Schnittstelle 60 empfangen werden, auswerten in Abhängigkeit von diesen Informationen weitere Informationen an die Schnittstelle 60 bzw. eine Fahrzeugelektronik ausgeben und/oder die Schaltvorrichtungen 40, 42, 44 sowie die Trennvorrichtung 46 ansteuern.

Aufgrund der hohen Spannungen der Fahrzeugbatterie 12 ist es erforderlich, alle Bauteile so zu isolieren, dass ein Spannungsüberschlag zu anderen Bauteilen des Fahrzeugs zuverlässig ausgeschlossen werden kann. Üblicherweise befinden sich alle vorstehend beschriebenen Vorrichtungen in einem separaten Gehäuse, wobei innerhalb dieses Gehäuses eine Isolierung, beispielsweise durch eine galvanische Trennung, zu den Vorrichtungen vorhanden ist, die keinen Kontakt zu Hochvolt-Komponenten des Batteriesystems 10 aufweisen.

Im Stand der Technik ist beispielsweise die Steuer- und Kontrollvorrichtung 58 gegen die Schaltvorrichtungen 40, 42, 44, die Trennvorrichtung 46 sowie die Messvorrichtung 48 isoliert. Des Weiteren ist es erforderlich, die Leitungen, die von den Batteriezellenüberwachungsvorrichtungen 18 zu Steuer- und Kontrollvorrichtung 58 führen, ebenfalls entsprechend zu isolieren, da diese in das Gehäuse mit den Hochvolt-Komponenten führen.

Die Batteriezellenüberwachungseinrichtung 18, die Schaltvorrichtungen 40, 42, 44, die Trennvorrichtung 46, die Messvorrichtung 48 sowie die Steuer- und Kontrollvorrichtung 58 bilden ein Batteriemanagementsystem zur Überwachung und gegebenenfalls zur Steuerung der Batterie 12.

Wie in Figur 1 zu sehen ist, weist das Batteriesystem 10 einen Gehäuseabschnitt 62 auf, in dem ausschließlich Vorrichtungen vorhanden sind, die mit dem Hochvolt-Stromkreis in Kontakt sind. Innerhalb dieses Gehäuseabschnitts 62 befinden sich die Schaltvorrichtungen 40, 42, 44, die Trennvorrichtung 46 sowie die Messvorrichtung 48. Die Steuer- und Kontrollvorrichtung 58 befindet sich außerhalb dieses Gehäuseabschnitts und ist über Kontaktstellen 64, 66 mit den Schaltvorrichtungen 40, 42, 44, der Trennvorrichtung 46 sowie der Messvorrichtung 48 verbunden. Lediglich diese Schnittstellen 64, 66 müssen eine entsprechende Isolierung bzw. einen entsprechenden Schutz gegen einen Spannungsüberschlag aufweisen.

Wie des Weiteren in Figur 1 zu sehen ist, ist die Signalleitung 68, die die Batteriezellenüberwachungsvorrichtung 18 mit der Steuer- und Kontrollvorrichtung 48 verbindet, außerhalb des Gehäuseabschnitts 62 verlegt. Die Batteriezellenüberwachungsvorrichtung 18 verfügt über eine entsprechende Isolation zwischen Zellpotenzial und Signalleitung.

Da sich im isolierten Gehäuseabschnitt 62 lediglich Hochvolt-Komponenten befinden, kann diese sehr klein ausgebildet sein. Zudem befinden sich alle Hochvolt-Komponenten des Batteriesystems 10 innerhalb dieses Gehäuseabschnitts 62, sodass nur ein Gehäuseabschnitt 62 und dessen Schnittstellen 64, 66 isolierend aufgebaut sein müssen.

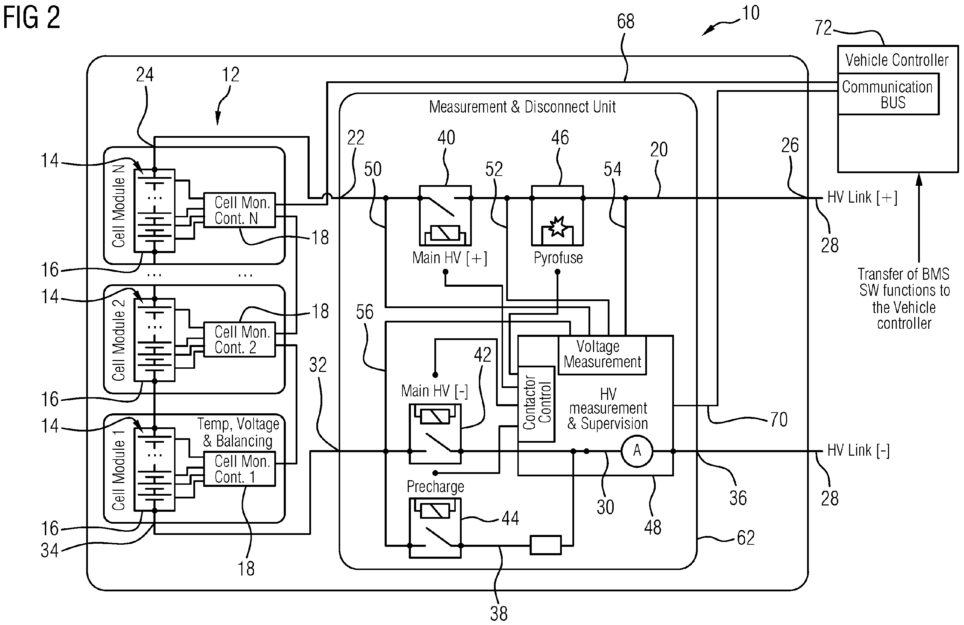

Die in Figur 2 gezeigte Ausführungsform entspricht im Wesentlichen der vorstehend beschriebenen Ausführungsform gemäß Figur 1. Anstelle der Steuer- und Kontrollvorrichtung 58 ist aber lediglich eine Schnittstelle 70 vorgesehen, um das Batteriesystem 10 mit einer Fahrzeugelektronik 72 zu verbinden. Da der Gehäuseabschnitt 62 elektrisch isoliert, insbesondere albanisch getrennt, ist, kann statt der Schnittstellen 64, 66 zur Steuer- und Kontrollvorrichtung 58 auch ohne zusätzlichen Aufwand eine Schnittstelle 68 zur direkten Kommunikation mit der Fahrzeugelektronik 72 vorgesehen sein, durch das Batteriesystem 10 noch kompakter ausgebildet sein kann. Insbesondere kann in dieser Ausführungsform die Steuerung der Schaltvorrichtungen 40, 42, 44 sowie der Trennvorrichtung 46 über die Messvorrichtung 48 erfolgen, um für diese keine separate Schnittstelle mit der Fahrzeugelektronik 72 vorsehen zu müssen.

Die Steuer- und Kontrollungsfunktionen, die in Ausführung 1 auf der Steuer- und Kontrollvorrichtung 58 implementiert sind, sind in Ausführung 2 in Form von Softwarefunktionen auf die Fahrzeugelektronik 72 ausgelagert. Die Steuer- und Kontrollvorrichtung 58 aus Ausführung 1 kann vollständig entfallen.

Um die innerhalb des Gehäuseabschnitts 62 entstehende Wärme abzuführen, sind vorzugsweise Teile des Gehäuseabschnitts 62 wärmeleitend ausgebildet. Beispielsweise kann eine Gehäusewand, an der einzelne Bauteile angeordnet sind, wärmeleitend ausgebildet sein, sodass eine einfache und schnelle Wärmeableitung aus dem Gehäuseabschnitt 62 erfolgen kann.

Die Schaltvorrichtungen 40, 42, 44 sind in der hier gezeigten Ausführungsform als mechanische Schaltvorrichtungen ausgebildet. Es können aber auch andere Bauteile, beispielsweise Halbleiterrelais des, verwendet werden, um den Gehäuseabschnitts 62 und somit das Batteriemanagementsystem 10 noch kompakter auszubilden.

## Patentansprüche

1. Batteriesystem (10), insbesondere für ein Fahrzeug, mit einer Messeinrichtung (48) für zumindest einen Batterieparameter, zumindest einer Schaltvorrichtung (40, 42, 44) zum Unterbrechen eines Stromkreises (28), einer Trennvorrichtung (46) zur Unterbrechung des Stromkreises (28) **dadurch gekennzeichnet, dass** die zumindest eine Messeinrichtung (48), die Schaltvorrichtung (40, 42, 44) und die Trennvorrichtung (46) in einem isolierten Gehäuseabschnitt (62) angeordnet sind, wobei der Gehäuseabschnitts (62) zumindest eine isolierte Schnittstelle (64, 66, 70) zu Kontaktierung einer mit einer Steuer- und Kontrolleinrichtung (58) und/oder einer Fahrzeugelektronik (72) aufweist.

2. Batteriesystem nach Anspruch 1, **dadurch gekennzeichnet, dass** eine Steuer- und Kontrolleinrichtung (58) vorgesehen ist, zum Empfang der Informationen der zumindest einen Messeinrichtung (48), zur Überwachung des Stromkreises (28) und zur Steuerung der zumindest einen Schaltvorrichtung (40, 42, 44) und der Trennvorrichtung (46) und zum Empfang von Informationen der Batteriezellen (14) ausgebildet ist, wobei die Steuer- und Kontrolleinrichtung (58) außerhalb des isolierten Gehäuseabschnitts (62) angeordnet ist.

3. Batteriesystem nach einem der vorhergehenden Ansprüche, **dadurch gekennzeichnet, dass** der isolierte Gehäuseabschnitt (62) Kontakte ein 20, 32) zu Kontaktierung mit der Fahrzeugbatterie (12) in aufweist.

4. Batteriesystem nach einem der vorhergehenden Ansprüche, **dadurch gekennzeichnet, dass** die Steuer- und Kontrolleinrichtung (58) zumindest einen Eingang für eine Batteriezellenüberwachungseinrichtung (18) aufweist.

5. Batteriesystem nach einem der vorhergehenden Ansprüche, **dadurch gekennzeichnet, dass** eine erste Messeinrichtung (48) eine Spannungsmesseinrichtung.

6. Batteriesystem nach einem der vorhergehenden Ansprüche, **dadurch gekennzeichnet, dass** eine zweite Messeinrichtung (48) eine Strommesseinrichtung ist.

7. Batteriesystem nach einem der vorhergehenden Ansprüche, **dadurch gekennzeichnet, dass** der Gehäuseabschnitt (62) Wärmeableitelemente aufweist.

8. Batteriesystem nach Anspruch 7, **dadurch gekennzeichnet, dass** die Wärmeableitelemente durch eine Gehäusewand mit einer hohen Wärmeleitfähigkeit gebildet sind, wobei die zumindest eine Messeinrichtung (48), die Schaltvorrichtung (40, 42, 44) und die Trennvorrichtung (46) an dieser Gehäusewand angeordnet sind.

9. Batteriesystem nach einem der vorhergehenden Ansprüche, **dadurch gekennzeichnet, dass** eine Steuer- und Kontrollvorrichtung (58) vorgesehen ist, wobei die Steuer- und Kontrollvorrichtung (58) außerhalb des isolierten Gehäuseabschnitts (62) angeordnet ist, wobei an der zumindest einen Batterie (12) eine Batteriezellenüberwachungseinrichtung (18) für zumindest eine Batteriezelle (14) vorgesehen ist, wobei die Batteriezellenüberwachungseinrichtung (18) direkt mit der Steuer- und Kontrolleinrichtung 58) verbunden ist.
